# EUROPEAN PATENT SPECIFICATION

(11) **EP 0 524 697 B1**
(45) Date of publication and mention of the grant of the patent: **28.10.1998**
(21) Application number: 92202237.1
(22) Date of filing: 20.07.1992
(51) Int. Cl.: B29C 47/92, B29C 47/88

(54) **Cooling device for extrusion heads for tubular films of plastic material**
Kühlvorrichtung für Extruderköpfe für Kunststoff-Schlauchfolien
Dispositif de refroidissement pour têtes d'extrusion de films tubulaires en matière plastique

(30) Priority: 23.07.1991 IT MI910670 U
(43) Date of publication of application: 27.01.1993
(73) Proprietor: Deponte, Edoardo, I-20046 Biassono (Milano) (IT)
(72) Inventor: Deponte, Edoardo, I-20046 Biassono (Milano) (IT)
(74) Representative: Bettello, Pietro, Dott. Ing.

(56) References cited:
- EP-A- 0 062 909
- EP-A- 0 274 386
- WO-A-90/15707
- DE-A- 2 658 518
- DE-A- 3 707 826
- DE-U- 9 108 417
- GB-A- 2 237 236
- US-A- 4 209 475
- US-A- 4 246 212
- US-A- 4 426 239
- US-A- 4 443 400
- US-A- 4 606 879

## Description

The present invention relates to a cooling device for extrusion heads for tubular films of plastic material.

Tubular films of plastic material, which constitute a semi-finished article forming a basis for a variety of products are at present obtained by extrusion using machines which comprise at least one die operatively associated with at least one cooling device as indicated in the preamble to Claim 1 (see e.g. US-A-4443 400).

The cooling device acts on tubular material continuously emerging from the die, by directing currents of ambient air against the external annular surface of the tubular film to remove its heat by convection, thus converting the material from a pasty to a solid state. From US-A-4443400 and WO-A-90/15707 cooling devices for extrusion heads for tubular films of plastic material, of the type comprising at least one conduit delivering the cooling fluids are known.

Said conduit is provided with means which serve to regulate the cooling action of the cooling fluid and which can be operated in accordance with data provided by means for detecting variations in the circumferential direction of the thickness of the extruded film, in such a manner than if locally the thickness of the film exceeds a reference value the cooling action exerted thereon is reduced. The said regulating means comprise a plurality of elements which modulate the cooling action and which are situated in positions corresponding to the entire circumference of the film; each of the said modulating elements acts on a corresponding and limited portion of the circumference of the film.

Other similar devices are described in USA-A-4.606.879, DE-A-3.707.826 and 2.237.236. In all these devices the elements modulating the cooling action act on the flow rate of the cooling fluid.

Such devices, in which the fluid flow is locally modified, present many problems about the local stability of the tubular film, that is in a semifluid condition and is subjected to remarkable stresses by the cooling fluid.

The document DE-A-2.658.518 discloses the use of either cold air or heat; document US-A-4.426.239 shows means of heating and/or cooling and heating elements switched on for a shorter duration thereby giving substantially constant air temperature.

Using all the devices of the prior art it is quite impossible to obtain a sufficiently constant thickness over the entire length of the tubular film in view of the unstable equilibrium to which the fused matter is subjected.

The purpose of the present invention is to obviate the foregoing drawbacks, i.e. to provide for extrusion heads for tubular films of plastic material, a cooling device capable of producing a film having not only the known required characteristics but also a predetermined uniform thickness throughout, the thickness of the film thus being far more uniform than that normally obtainable with extrusion heads using known cooling means.

This object is achieved in accordance with claim 1.

Particular embodiments of the invention are subject of the dependent claims.

The device according to the invention, is capable of modifying the cooling locally, by raising the temperature of the cooling fluid in relation to the average temperature of said fluid along the entire circumference of the film.

The said device acts on the film in its consolidation phase in a manner which differs from one zone to the next, only taking effect where it becomes necessary to adpat the void thickness to a certain reference value.

Those portions of film of which the thickness exceeds that preselected are subjected to a slower cooling process than the remaining portions, of which the thickness is nevertheless adequate or close to the thickness mentioned, this in order to allow more lengthening during the stretching action .

Obviously, the greater the number of modulating elements the better the uniformity of thickness obtainable, the maximum number possible being governed by considerations of a technical-economic nature.

The invention is illustrated by the diagrams on the accompanying sheets of drawings, purely by way of an example and without any limitative effect.

Figure. 1 schematically illustrates an extrusion machine to which a device according to the invention has been applied.

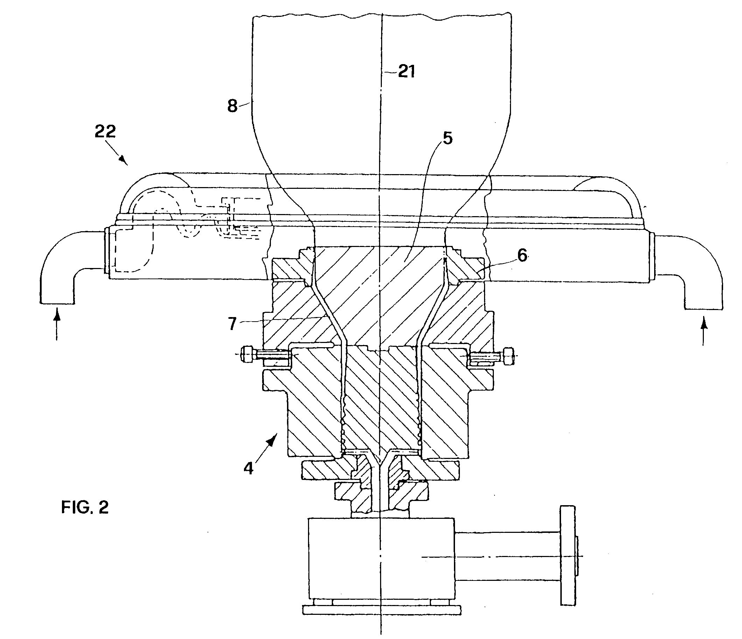

Figure. 2 is a sectional view of an extrusion machine provided with a device according to the invention.

Figure. 3 is a sectional view of a device according to the invention, applied to an extrusion head.

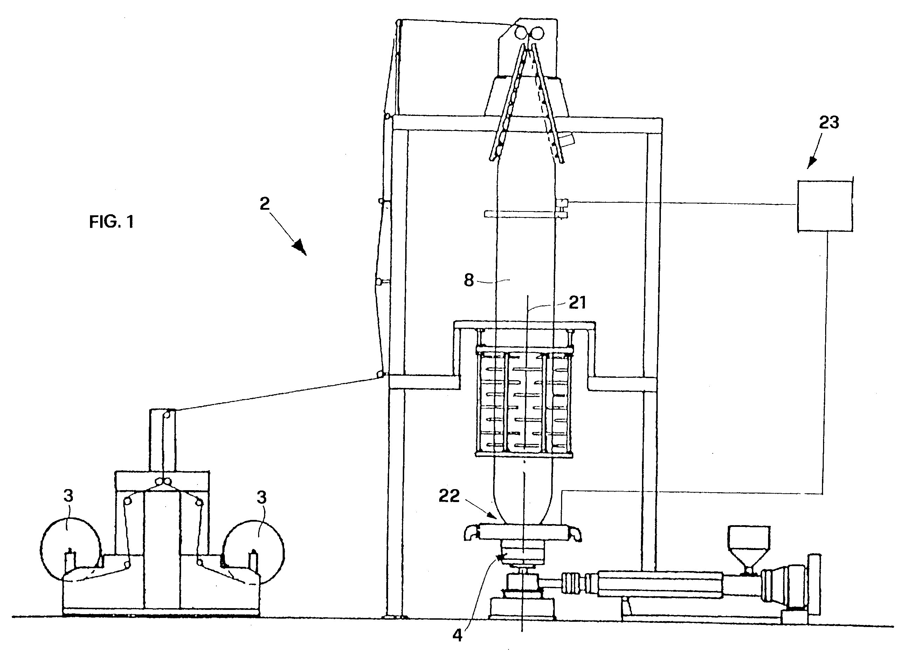

Referring to the drawings, the cooling device to which the invention relates, marked 1, as a whole, is used on the extrusion machine illustrated in Figure.1 and marked 2 as a whole.

Machines 2 of these types produce via an extrusion head 4 a cylindrical tubular film 8 of plastic material, which, after being consolidated by the cooling process, is flattened and wound onto rollers 3.

The extrusion head comprises a die consisting of a member 5 and a cavity 6 which are coaxial and define an annular conduit 7 of adjustable thickness from which emerges the film 8, already formed in a pasty state. The function of the cooling device 1, is to cool the film in such a way as to consolidate its structure.

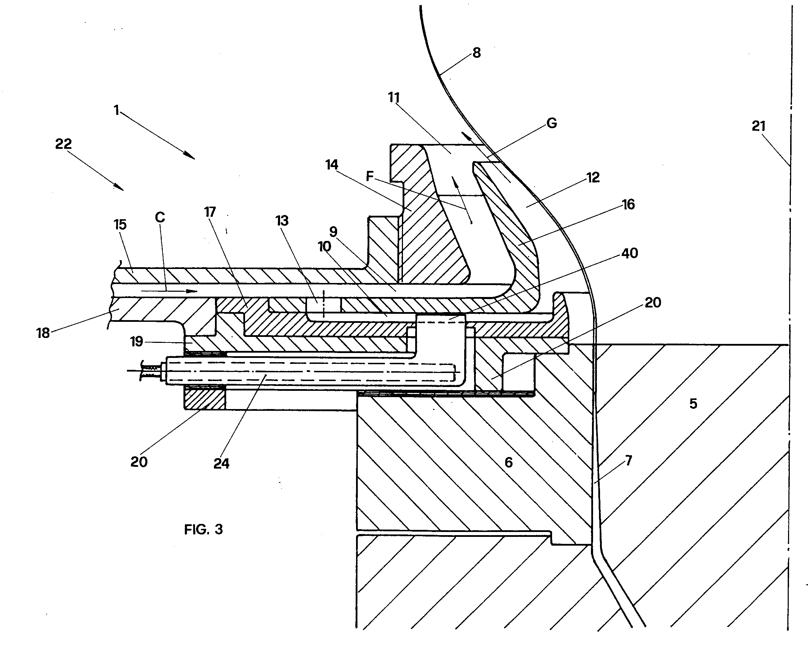

Referring particularly to Figure 3, the cooling device 1 comprises an annular body 22 which is operatively associated with means 23 (Figure 1) which detects variations in the thickness of the film. The annular body 22 comprises a first second, third, fourth, fifth, sixth and seventh element (referenced 14 -20 respectively) of substantially annular construction positioned coaxially and symmetrically in respect of the extrusion axis 21, which corresponds to the axis of the tubular film 8.

The annular elements 14-20 define first and second annular conduits, 9, 10 respectively, for delivering cooling fluid (preferably ambient air) to the entire external surface of the tubular film 8 via first and second ports, 11, 12 respectively, as shown by the arrows F and G. The second annular conduit 10 is fed from the first conduit 9 via one or more ports 13 whose axis is substantially parallel to the axis 21.

Means for regulating the cooling action, marked 24 as a whole, are mounted between the annular elements 14-20.

As illustrated in Figure 3 the device 1 is designed to cause the regulating means for the cooling action to modulate the action by acting on the temperature of the cooling fluid (preferably consisting of air) by varying it in relation to the average temperature of the said fluid along the entire circumference of the film preferably by increasing it.

The regulating means 24 preferably comprise electrical resistors, which term does not preclude the possibility of employing bivalent heating/cooling elements, such as thermoelectric elements known on the market under the name "PELTIER". These elements too can be controlled by the means 23 for detecting the thickness variation occurring in the film.

The temperature of the fluid (usually air) passing through the second conduit 12 is thus varied in accordance with the thickness required. There is therefore a localised acceleration and/or deceleration in the cooling action, with consequent localised control, for this purpose, of the molecular creep.

Where the thickness of the film emerging from the conduit 7 exceeds that required and thus that of the other zones the cooling air undergoes a localised heating action in such a way as to slow down the cooling process. This ensures that the molecular creep phenomena are maintained until the required thickness is obtained.

The heat exchange between the air flow to be modulated, passing into the conduit 10, is assisted by the interactions occurring between the air flow and a series of projections or teeth 40 aligned in such a way as to form a comb-type structure.

## Claims

1. Cooling device (1,) for extrusion heads for tubular films of plastic material (8), of the type comprising at least one conduit (10,) delivering the cooling fluid, the said conduit (10,) being provided with means (24,) which serve to regulate the cooling action of the cooling fluid and which can be operated in accordance with data provided by means (23) for detecting variations in the circumferential direction of the thickness of the extruded film (8), in such a manner that if the thickness of the film exceeds a reference value the cooling action exerted thereon is reduced, said regulating means (24,) comprising a plurality of elements which modulate the cooling action and which are situated in positions corresponding to the entire circumference of the film (8), each of the said modulating elements acting on a corresponding and limited portion of the circumference of the film (8),
characterised in that the elements modulating the cooling action act on the temperature of the cooling fluid.

2. Device in accordance with Claim 1, characterised in that the elements modulating the cooling action operate by raising the temperature of the cooling fluid in relation to the average temperature of the said cooling fluid along the entire circumference of the film.

3. Device in accordance with Claim 1 or 2, characterised in that the regulating means (24) consist of bivalent thermoelectric elements of heating or cooling preferably of the PELTIER-type operatively positioned in at least one annular conduit (10).

4. Device in accordance with Claim 2, characterised in that the elements modulating the cooling action are electrical resistors operatively positioned in at least one annular conduit (10).

5. Device in accordance with Claim 3, characterised in that the bivalent thermoelectric elements comprise a series of projections or teeth (40) arranged to form a comb-type structure interacting with the flow of the cooling fluid.

## Patentansprüche

1. Kühlvorrichtung (1) für Extruderköpfe für Kunststoff-Schlauchfolien (8) des Typs mit wenigstens einem die Kühlflüssigkeit zuführenden Kanal (10), wobei der Kanal (10) Mittel (24) aufweist, die zum Regeln der Kühlleistung der Kühlflüssigkeit dienen und in Abhängigkeit von Daten betätigt werden können, welche von Mitteln (23) zum Erkennen von Veränderungen in der Umfangsrichtung der Dicke der extrudierten Folie (8) bereitgestellt werden, derart, daß wenn die Dicke der Folie einen Referenzwert überschreitet, die auf diese angewandte Kühlleistung vermindert wird, wobei die Regelungsmittel (24) eine Mehrzahl von die Kühlleistung modulierenden Elementen umfassen, welche in Positionen entsprechend des gesamten Umfangs der Folie (8) angeordnet sind, wobei jedes der modulierenden Elemente auf einen entsprechenden, begrenzten Teil des Umfangs der Folie (8) einwirkt, dadurch gekennzeichnet, daß die die Kühlleistung modulierenden Elemente die Temperatur der Kühlflüssigkeit beeinflussen.

2. Vorrichtung nach Anspruch 1, dadurch gekennzeichnet, daß die die Kühlleistung modulierenden Elemente so arbeiten, daß sie die Temperatur der Kühlflüssigkeit im Verhältnis zur Durchschnittstemperatur der Kühlflüssigkeit entlang dem gesamten Umfang der Folie erhöhen.

3. Vorrichtung nach Anspruch 1 oder 2, dadurch gekennzeichnet, daß die Regelungsmittel (24) aus bivalenten thermoelektrischen Elementen zum Heizen oder Kühlen, vorzugsweise vom Typ PELTIER-Element bestehen, die operativ in wenigstens einem ringförmigen Kanal (10) angeordnet sind.

4. Vorrichtung nach Anspruch 2, dadurch gekennzeichnet, daß die die Kühlleistung modulierenden Elemente elektrische Widerstände sind, die operativ in wenigstens einem ringförmigen Kanal (10) angeordnet sind.

5. Vorrichtung nach Anspruch 3, dadurch gekennzeichnet, daß die bivalenten thermoelektrischen Elemente eine Serie von Vorsprüngen oder Zähnen (40) umfassen, die so angeordnet sind, daß sie eine kamm-ähnliche Struktur bilden, die mit dem Fluß der Kühlflüssigkeit in Wechselwirkung tritt.

## Revendications

1. Dispositif de refroidissement (1) pour des têtes d'extrusion de films tubulaires constitués de matière plastique (8), du type comportant au moins un conduit (10) distribuant le fluide de refroidissement, ledit conduit (10) étant muni de moyens (24) qui servent à réguler l'action de refroidissement du fluide de refroidissement et qui peuvent être actionnés selon des données fournies par des moyens (23) destinés à détecter des variations dans la direction circonférentielle de l'épaisseur du film extrudé (8), d'une manière telle que si l'épaisseur du film dépasse une valeur de référence, l'action de refroidissement exercée sur celui-ci est réduite, lesdits moyens de régulation (24) comportant plusieurs éléments qui modulent l'action de refroidissement et qui sont situés dans des positions correspondant à la circonférence entière du film (8) chacun desdits éléments de modulation agissant sur une partie correspondante et limitée de la circonférence du film (8), caractérisé en ce que les éléments modulant l'action de refroidissement agissent sur la température du fluide de refroidissement.

2. Dispositif selon la revendication 1, caractérisé en ce que les éléments modulant l'action de refroidissement agissent en élevant la température du fluide de refroidissement selon la température moyenne dudit fluide de refroidissement sur toute la circonférence du film.

3. Dispositif selon la revendication 1 ou 2, caractérisé en ce que les moyens de régulation (24) sont constitués d'éléments thermoélectriques bivalents (chauffant ou refroidissant), de préférence du type "PELTIER", positionnés de manière active dans au moins un conduit annulaire (10).

4. Dispositif selon la revendication 2, caractérisé en ce que les éléments modulant l'action de refroidissement sont des résistances électriques positionnées de manière active dans au moins un conduit annulaire (10).

5. Dispositif selon la revendication 3, caractérisé en ce que les éléments thermoélectriques bivalents comportent une série de saillies ou de dents (40) agencée pour former une structure du type à peigne agissant mutuellement avec l'écoulement du fluide de refroidissement.
